# EUROPEAN PATENT APPLICATION

(11) **EP 4 510 033 A1**
(43) Date of publication of application: **19.02.2025**
(21) Application number: 23191944.0
(22) Date of filing: 17.08.2023
(51) Int. Cl.: G06F 30/20, G06F 111/02

(54) **METHOD FOR SIMULATING A PROCESSING SYSTEM**

(71) Applicant: Robert Bosch GmbH, 70442 Stuttgart (DE)
(72) Inventor: Raza, Syed Aoun, 70376 Stuttgart (DE); Vallavanthara, Amal Jose, 70499 Stuttgart (DE); Rakesh, Nidavani, 580004 Dharwad, Karanataka (IN)

(57) **Abstract**

The present invention refers to a method for simulating a processing system, comprising receiving (110) as an input information regarding a number of processor cores of the processing system and information regarding properties of a number of processes to be executed by the processing system; providing (120) depending on the received input a two-dimensional array as a model of the processing system, wherein a first dimension of the two-dimensional array represents the number of cores of the processing system and wherein a second dimension of the two-dimensional array represents a number of time units; determining (130) entries of the two-dimensional array such that these entries indicate which specific processor core of the number of processor cores executes which specific process of the number of processes at which specific time unit of the number of time units.

## Description

The present invention relates to a computer-implemented method for simulating a processing system as well as to a computing unit and a computer program for performing the method.

### Background of the invention

Computer processing systems in practically all different fields of application, such as signal processing, graphics, networking or embedded systems, use processors with multiple integrated processor cores. Multi-core systems allow for enhancing the efficiency of computing tasks by parallelisation of the computing processes, i.e. by breaking tasks down in several elements that may be computed in parallel on the cores. However, the parallelisation of software code - which may contain millions of lines of code and may have been optimised for single-core systems - for such architectures is not trivial.

An important application of multicore systems is within the field of automotive computing architecture, where software-based control, modelling and analysis are increasingly significant. Usually, one or more control units (e.g. ECU, engine control units) may be implemented as an embedded multicore control unit. The software running on these control units includes a large number of smaller, interacting processes as well as complex models which require extensive computing capacities. At the same time, many software architectures in the automotive fields have been developed for single-core units over decades and are highly standardized.

A simulation of a corresponding processing system with several processor cores executing a multitude of processes can be performed in order to determine an optimised allocation of the number of processes to the number of processor cores.

### Disclosure of the invention

According to the invention a computer-implemented method for simulating a processing system as well as a computing unit and a computer program for performing the method with the features of the independent claims are proposed. Further embodiments form the subject-matter of the dependent claims and of the subsequent description.

Information or data regarding a number of processor cores of the processing system to be simulated and information or data regarding properties of a number of processes to be executed by the processing system to be simulated are received as an input. This input can for example be provided by a user.

The information regarding the processor cores can particularly comprise the specific number of the processor cores of the system to be simulated itself. Further, this information can comprise generic information about the computing capability of each processor core, e.g. processing power, frequency etc. It is particularly not necessary to specify hardware details about the processing system and about the processor cores itself.

The information regarding processes particularly comprise the number of processes as well as e.g. predetermined properties of the execution of the processes, e.g. a maximum execution time, a priority etc. The processes or software processes can for example comprise tasks and interrupts. For example, the information can comprise a source code of the processes or of a corresponding software, a configuration or configuration file of an operating system. The information can e.g. further comprise trace data or tracing data of the software and the processing system.

Depending on this received input, a two-dimensional array or a matrix is provided as a model of the processing system, wherein a first dimension of the two-dimensional array represents the number of cores of the processing system to be simulated and wherein a second dimension of the two-dimensional array represents a number of time units. The second dimension particularly represents a time frame of the simulation, wherein each of the corresponding cores can perform an operation, especially execute a process, at each of the time units. This model of the processing system particularly allows to simulate at which specific time unit which specific processor core can perform a specific operation.

Without loss of generality, the two-dimensional array shall be referred to as Aᵢⱼ with the index 'i' corresponding to the first dimension and with the index 'j' corresponding to the second dimension. For example, a number of rows of the array Aᵢⱼ in the first dimension can correspond to the number of processor cores, such that each row represents one of the processor cores. A number of columns in the second dimension can for example can correspond to the total number of time units, in which the processor cores can execute a process.

Entries or elements of the two-dimensional array are determined, in particular as a simulation of the process system or as a simulation of the execution of the processes by the processing system or as a simulation of the operation of the processing system. The corresponding entries are determined such that these entries indicate which specific processor core of the number of processor cores executes which specific process of the number of processes at which specific time unit of the number of time units.

The present invention provides an easy and quick way to model and simulate operation of the processing system. Providing the two-dimensional array as the model of the processing system and determining the entries of the array as the simulation of the processing system operation can be performed with low expenditure and with low computational effort. It is in particular not necessary to model the specific hardware of the processing system in its entirety and to simulate execution of processes on a hardware level, which can be very time consuming and could take several hours, depending on the complexity of the processing system. The present method utilises a simplified, basic model of the processing system, such that the simulation can be performed on small timescales and can generate results in minutes or even seconds.

The present invention is for example particularly suitable for use in a developmental phase of designing process of a corresponding processing system. In early stages of such a designing process, hardware details of the system may oftentimes not yet be available and may still need to be determined. Since no specific hardware details are necessary to determine the model according to the present invention, the present invention may for example be used to design and develop the corresponding processing system in an optimised way to effectively execute the corresponding processes. The invention particularly allows to input only the already available information about the processing system and still produce meaningful results about the functioning of the system and its ability to execute the processes.

A corresponding algorithm and data storage methodology for determining the two-dimensional array and its entries particularly provides an efficient and fast way to simulate huge models containing millions of objects. Further deeper analysis like effect chains, latency calculation, etc. can be easily done from the entries of the two-dimensional array, which can serve as a basis for a subsequent evaluation of the system behaviour. Particularly, a visualisation and an extensive analysis can be performed depending on the determined array entries, for example to find bottlenecks. The corresponding data underlying the array entries can for example also be used to develop parameters like task waiting time on the run. The developed data can then e.g. be immediately deleted to save space or for privacy concerns.

In particular, the present method allows to replace a simulation on the hardware by taking trace data of the processing system to be simulated and by combining this information with the source code and OS configuration files to determine the execution times of the processes and the scheduling algorithm of the processor cores of the processing system. For example, a tracer mechanism can be used to record the trace data from the corresponding processing system. The trace data can then be loaded or translated into the model of the processing system. The format of the trace data can be converted into the format that is required for the model of the processing system. This formally converted data can then be imported into the model. Expediently, any kind of tracer mechanism can be used and the trace data can be in any kind of format since the trace data is automatically translated into the format necessary for the model. For creating the model, the correspondingly converted trace date, configuration files of the operating system, source code, and ELF data ("Executable and Linkable Format", ELF) can expediently be used as the corresponding information regarding properties of the processes, i.e. as the corresponding input. The model can particularly combine all these data. For example, from the OS configuration files, names of tasks, priority, periodicity, and trigger points can be retrieved. From the source code, a call graph, tasks, memory read and writes, inter task calls, and runnable calls can be retrieved. From the trace data, a minimum execution time, an average execution time and a maximum execution time of tasks can be retrieved as well as priority and number of triggers in a given period of time.

In an embodiment, the entries of the two-dimensional array are determined to be a predetermined identification value or identification number of a corresponding specific process executed by a corresponding specific processor core at a corresponding specific time unit, or to be a predetermined value or number if a corresponding specific processor core does not execute one of the number of processes at a corresponding specific time unit. Each process can particularly be given a unique identification number or process ID. A data structure can be created for each process containing the process ID, timing information and process-core mapping. For example, an entry Aᵢⱼ can be determined or set to a corresponding process ID, if the corresponding process is executed by the i-th core at the j-th time unit. If the i-th core does not execute any one of the number of processes at the j-th time unit, the corresponding entry Aᵢⱼ can be determined or set to the predetermined value, e.g. '-1' or '0'.

In an embodiment, a second two-dimensional array is provided, wherein a first dimension of this second two-dimensional array represents the number of processes to be executed by the processing system and wherein a second dimension of the second two-dimensional array represents the number of time units. This second array can especially indicate which process is executed or triggered at which time unit. Without loss of generality, this second two-dimensional array shall be referred to as Tₙₘ with the index 'n' corresponding to its first dimension and with the index 'm' corresponding to its second dimension. The second dimension 'm' of the second two-dimensional array Tₙₘ particularly corresponds to the second dimension 'j' of the above described (first) two-dimensional array Aᵢⱼ. For example, a number of rows of the second array Tₙₘ in the first dimension 'n' can correspond to the number of processes with each row representing one process. A number of columns in the second dimension 'm' can e.g. correspond to the total number of time units, in which the processor cores can execute the processes.

In an embodiment, entries or elements of the second two-dimensional array Tₙₘ are determined depending on the entries of the first two-dimensional array Aᵢⱼ such that these entries of the second two-dimensional array indicate which specific process of the number of processes is executed or triggered by any one of the number of processor cores at which specific time unit of the number of time units. In particular, the entries of the first array, indicating which processor executes which process at which time, can be converted into the entries of the second array, indicating when the various processes are executed. Particularly, both two-dimensional arrays with their correspondingly determined entries as a result of the simulation of the processing system operation yield an overview of the processing behaviour of the various processor cores and of the manner in which the various processes are executed.

In an embodiment, the entries of the second two-dimensional array are determined to be a predetermined identification value or identification number, especially the above referenced process ID, of a corresponding specific process executed by any one of the processor cores at a corresponding specific time unit, or to be a predetermined value or number if a corresponding specific process is not executed by any one of the processor cores at a corresponding specific time unit. For example, an entry Tₙₘ can be determined or set to a corresponding process ID, if the corresponding n-th process is executed at the j-th time unit. If the n-th process is not executed at the j-th time unit, the corresponding entry Tₙₘ can be determined or set to the corresponding predetermined value, e.g. '-1' or '0'.

In an embodiment, the method further comprises a step of evaluating or analysing the execution of the number of processes by the number of processor cores depending on the determined entries of the two-dimensional array, further especially depending on the determined entries of the second two-dimensional array. By means of the array entries as result of the simulation, it can partially be evaluated how efficiently the processes are executed, how efficiently the processor cores operate, whether requirements for the execution of the various processes can be satisfied, etc. For example, a visualisation of simulation results and of the two-dimensional arrays Aᵢⱼ, Tₙₘ can be performed in the course of this evaluating process.

In an embodiment, the method further comprises a step of adjusting, especially optimising, simulation parameters, especially the received input, depending on the step of evaluating the execution of the number of processes by the number of processor cores. In particular, these adjusted parameters can specify how the number of processor cores execute tasks in general or the number of processes in general. For example, the adjusted parameters can comprise a scheduling algorithm defining how a process execution schedule of the various processor cores is determined. Particularly, depending on the simulation evaluation, e.g. depending on whether the execution of individual processes can be improved, the model and simulation can be adjusted in order to determine an optimised manner in which the processor cores execute the processes. Therefore, the result of the simulation is analysed and necessary adjustments are made in the multi-core system to optimise it. The correspondingly adjusted simulation can be re-run until full satisfaction is obtained and until all requirements can be fulfilled. Since the simulation can be performed in a short amount of time on a small timescale, a re-run of the simulation and multiple iterations of the simulation can be performed in a small amount of time, e.g. during the duration of only a few minutes.

In an embodiment, the step of evaluating the execution of the number of processes by the number of processor cores comprises determining one or several of the following values or evaluation values.

An amount of time for a specific processor core of the number of processor cores can be determined as evaluation value, which the corresponding processor core spends executing one or several of the number of processes. This amount of time can correspond to a task-core utilization or process-core utilisation, i.e. an amount of time the core is utilised by the processes.

A waiting time or process waiting time can be determined as evaluation value, which a specific process of the number of processes spends waiting before being executed by one of the processor cores. This waiting time especially corresponds to specific times in the time-frame of the simulation, when the particular process spends time waiting to be executed.

A running time or process running time can be determined as evaluation value, for which a specific process of the number of processes is executed by one of the processor cores. This running time particularly corresponds to specific times in the time-frame of the simulation, when the specific process spends time being executed.

A deadline miss or process deadline miss can be determined as evaluation value, when a specific process of the number of processes is not completely executed before a predetermined deadline. A deadline miss of that kind can especially correspond to specific instances during the simulation, when a process could not completely be executed, e.g. because of higher priority process running on the same processor core.

A deadline miss time can be determined as evaluation value, which a specific process of the number of processes, especially yielding a specific deadline miss, would have required in order to be completely executed before a corresponding deadline and not miss the deadline.

A trigger time or trigger event can be determined as evaluation value, when a specific process of the number of processes is triggered to be executed. For example, a trigger time of that kind can correspond to a time point or time unit in the specified time-frame of the simulation, when the corresponding process was triggered, e.g. because of inter-task triggers, task chaining or periodic stimulus.

A process execution path and/or a latency or effect chain latency can be determined as evaluation value.

In an embodiment, the input comprises one or several of the following information:
The input can comprise the number of time units and/or a length of each time unit. The input can therefore particularly define an execution timeframe or timeline for the simulation and for the processes to be executed by the processing system to be simulated.

The input can comprise a predetermined execution time or process execution time for a specific process of the number of processes. This process execution time can particularly comprise a minimum, an average, a maximum and/or a Weibull distribution of the execution time of the processes, especially individually for each of the processes. These execution times can e.g. be retrieved from task trace data or from estimates of the load of the task. The process execution time can further especially correspond to stress levels, wherein a user can choose the stress levels of the cores e.g. between minimum stress, average stress, maximum stress level and Weibull distribution stress level.

The input can comprise a priority or process priority of a specific process of the number of processes, especially a priority of each process in comparison to other processes to be executed on the cores.

The input can comprise a scheduling algorithm for a specific process of the number of processes. This scheduling algorithm can especially define how a process execution schedule of the various processor cores is determined.

The input can comprise a predetermined allocation of a specific process of the number of processes to a specific processor core of the number of processor cores. This allocation can correspond to a user defined process-core mapping.

In an embodiment, the method further comprises determining an allocation or an optimised allocation of the number of processes to the number of processor cores depending on the determined entries of the two-dimensional array, further especially depending on the determined entries of the second two-dimensional array, especially depending on the step of evaluating the execution of the number of processes by the number of processor cores. It can particularly be evaluated depending on the array entries how efficiently the processes are executed by the cores and whether requirements for the execution of the processes can be satisfied. Simulation parameters, especially the received input, e.g. the scheduling algorithm, can be adjusted and optimised in order to determine an optimised allocation such that the various processes can be executed in an optimised manner by the correspondingly allocated processor cores.

In an embodiment, the model of the processing system is an AMALTHEA model. AMALTHEA is a model-based platform for designing, modelling and simulating multi-core adapted software. In particular, an AMALTHEA model is an open source model used to store data about the specification of automotive system details. An AMALTHEA model usually involves three separate models: a hardware model, a software model, and a constraints model. The hardware model may include information such as the number of processor cores, a system clock frequency for the processors, or details on memory connected with the cores. Each multi-core processing system may be modelled in a hierarchical manner in the hardware model. The software model may e.g. be based on defining small execution units (so called runnables), tasks, read and write accesses to memory, and others within the application code. Binary analysis tools and decomposition techniques for building the software model from code are known in the art and will not be detailed here. Finally, the constraints model may for example provide information on dependencies, sequences of runnables, timing constraints, and other conditions of executing the code. All data of the model may be provided and stored in a suitable format, such as XML ("extensible markup language") or an eclipse EMF ("eclipse modelling framework") model. Further details of AMALTHEA modelling which may be employed for purposes of this invention may be found at http://www.amalthea-project.org/.

For example, a tracer mechanism of any kind can be used to record the corresponding trace data in any kind of format. This trace data can then be loaded into the AMALTHEA model. For this purpose, a corresponding conversion mechanism can expertly be used, which is configured for converting any kind of trace data format into the format required for the AMALTHEA model. The AMALTHEA model can then e.g. be created using the so-called "SCA2AMALTHEA" analysis tool, which is expediently configured for extracting information, e.g. from source code or event traces. The "SCA2AMALTHEA" analysis tool can expediently use the correspondingly converted trace data, OS configuration files, source code, and ELF data. From the OS configuration files, the analysis tool can retrieve task names, priority, periodicity, and trigger points. From the source code, the tool can retrieve the call graph, the tasks, memory read and writes, inter task calls, and runnable calls. From the trace data, the tool can retrieve minimum, average and maximum execution time of the tasks, the priority, and the number of triggers in a given period of time.

The present invention is particularly suitable for use in the automotive sector. The processing system can especially be a multicore processing system intended for or arranged in a vehicle and can for example be a microprocessor, a microcontroller, a control unit, a system of control units etc. Vehicles have increasingly complex E/E architectures, so that on the one hand a large number of control units can be present in a vehicle, and on the other hand each control unit can in turn contain a large number of multicore processors with several processor cores. The present method particularly allows to design and developed a processing system of that kind with low expenditure, low computational effort and in a quick, effective and reliable manner. The present method further allows to determine an optimised allocation of process to cores of the automotive processing system such that these processes can efficiently be executed during runtime of the vehicle, in particular such that safety requirements in the automotive sector can be fulfilled.

A computing unit according to the invention is configured, in particular by a computer program, to carry out an inventive method.

The implementation of the invention in the form of software is advantageous because this allows particularly low costs, especially if an executing processing unit is still being used for other tasks and therefore is present anyway. Suitable media for providing the computer program are in particular diskettes, hard drives, flash memory, EEPROM, CD-ROMs, DVDs etc. Downloading a program via computer networks (Internet, intranet, etc.) is possible.

Further advantages and developments of the invention are specified in the description and the associated drawings.

It goes without saying, that the features named above and still to be explained below can be used not only in the combination indicated respectively, but also in other combinations or in a stand-alone manner, without going beyond the scope of the present invention.

The invention is illustrated schematically in the drawings on the basis of exemplary embodiments and will be described in detail in the following with reference to the drawings.

### Description of drawings

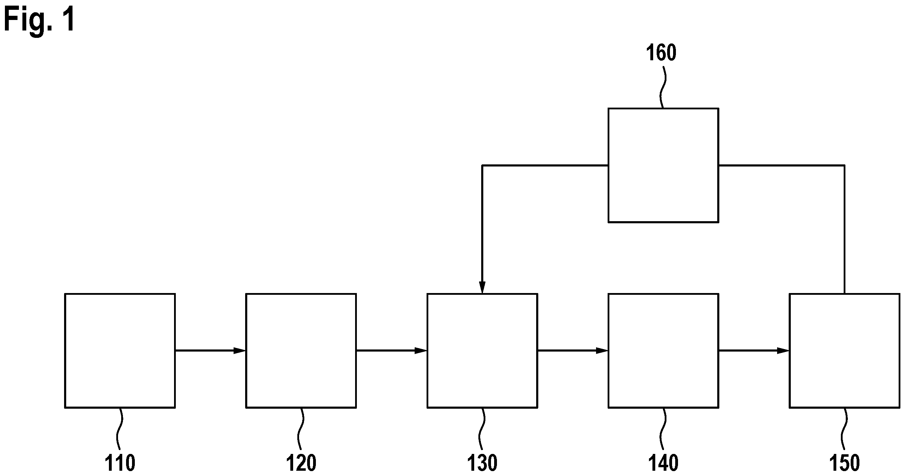

- Figure 1: schematically shows an embodiment of a method according to the invention as a block diagram.

### Detailed description of the drawing

Figure 1 schematically shows an embodiment of a method according to the present invention as a block diagram.

The method is for example performed in the course of a development or designing phase of a control unit of a vehicle, e.g. a motor control unit, wherein this control unit shall comprise a multi-core processor with several processor cores. An execution of a software in the control unit shall be simulated such that an optimised allocation of various processes of this software to the processor cores of the control unit can be determined.

For this purpose, in step 110, information or data regarding the number of processor cores of the control unit to be simulated and information regarding properties of the number of processes to be executed are received. For example, this input can comprise the number of processor cores itself, but no hardware details of the control unit. The input can further comprise e.g. a source code of the processes or of a corresponding software, a configuration or configuration file of an operating system of the control unit, as well as trace data or tracing data of the software and the control unit. For example, a tracer mechanism can be used to record the trace data. The input can further comprise a predetermined execution time for the processes, particularly a minimum, an average, a maximum and a Weibull distribution of the execution time of each process. Further, the input can comprise a priority of each process, a scheduling algorithm defining how a process execution schedule of the processor cores is determined, and a predetermined allocation of individual processes to one of the processor cores. The input can further comprise simulation paraments regarding the simulation, e.g. a number of time units and a length of each time unit. The input can therefore define an execution timeframe or timeline for the simulation. For example, each time unit can have a length of 1 ms. The total number of time units can e.g. be in the range between 2 ms and 1500 ms.

In step 120, a (first) two-dimensional array Aᵢⱼ is provided as a model of the control unit depending on the received input, wherein a first dimension 'i' represents the number of cores of the control unit and wherein a second dimension 'j' represents the number of time units. For example, an array A_{3,1000} can represent a control unit with three processor cores to be simulated for 1000 time units, e.g. 1000 ms. The control unit can thus e.g. be modelled by three rows, wherein each row represents one of the processor cores and wherein for each of these rows space for 1000 integers is reserved.

This model is particularly determined as an AMALTHEA model. Details of AMALTHEA modelling which may be employed for purposes of this invention may be found at http://www.amalthea-project.org/.

For example, a so-called "SCA2AMALTHEA" analysis tool can be used for creating the AMALTHEA model. This "SCA2AMALTHEA" analysis tool can e.g. be configured for extracting information from the trace data, OS configuration files, source code, and ELF data. From the OS configuration files, the analysis tool can retrieve task names, priority, periodicity, and trigger points. From the source code, the tool can retrieve the call graph, the tasks, memory read and writes, inter task calls, and runnable calls. From the trace data, the tool can retrieve minimum, average and maximum execution time of the tasks, the priority, and the number of triggers in a given period of time.

In step 130, a simulation of the control unit and of the execution of the processes by the control unit is performed. In the course of this simulation, entries or elements of the two-dimensional array Aᵢⱼ are determined such that these entries indicate which specific processor core executes which specific process at which specific time unit. Each process is given a unique identification number or process ID. An entry Aᵢⱼ can be determined to be a corresponding process ID, if the corresponding process is executed by the i-th core at the j-th time unit. If the i-th core does not execute any one of the number of processes at the j-th time unit, the corresponding entry Aᵢⱼ can be determined to be a predetermined value, e.g. 1-11.

In step 140, a second two-dimensional array Tₙₘ is provided in the course of this simulation, wherein a first dimension 'n' of this second array represents the number of processes to be executed by the processing system and wherein a second dimension 'm' of the second array represents the number of time units. Entries of the second array Tₙₘ are determined depending on the entries of the first array Aᵢⱼ such that these entries of the array indicate which specific process is executed by any one of the processor cores at which specific time unit. In particular, an entry Tₙₘ can be determined to be the corresponding process ID, if the corresponding n-th process is executed at the j-th time unit. If the n-th process is not executed at the j-th time unit, the corresponding entry Tₙₘ can be determined to be the corresponding predetermined value, e.g. '-1'.

In step 150, an evaluation or analysis of the execution of the processes by the processor cores is performed depending on the determined entries of the first and second two-dimensional arrays. In the course of this evaluation, a visualising of the process results, e.g. the array entries, can be performed and evaluation values can be determined. For example, a task-core utilisation, i.e. an amount of time, which each processor core spends executing one or several of the processes, can be can be determined as evaluation values as well as a waiting time which each process spends waiting before being executed, a running time for which each process is executed, a trigger time when each process is triggered to be executed, a process execution path, and an effect chain latency. Further, if a process is not completely executed before a predetermined deadline, a corresponding a deadline miss can be determined as evaluation value as well as a deadline miss time, which the corresponding process would have required in order to be completely executed before the corresponding.

In step 160, simulation parameters are adjusted and optimised depending on the evolution performed in step 150, in particular depending on the determined evaluation values. For example, some of the received input can be adjusted, e.g. the scheduling algorithm. In particular, the allocation of the processes to the processor cores can be adjusted in dependent of the evaluation values. After adjusting the simulation parameters, the steps 130, 140 and 150, i.e. the simulation and the evaluation, can be performed again and, if necessary, another adjustment can be performed. Since the simulation can be performed in a short amount of time, a re-run of the simulation and multiple iterations can be performed in a small amount of time, e.g. during the duration of only a few minutes, until an optimised allocation is determined.

## Claims

1. A computer-implemented method for simulating a processing system, comprising:
receiving (110), as an input, information regarding a number of processor cores of the processing system and information regarding properties of a number of processes to be executed by the processing system;
providing (120), depending on the received input, a two-dimensional array as a model of the processing system, wherein a first dimension of the two-dimensional array represents the number of cores of the processing system and wherein a second dimension of the two-dimensional array represents a number of time units;
determining (130) entries of the two-dimensional array such that these entries indicate which specific processor core of the number of processor cores executes which specific process of the number of processes at which specific time unit of the number of time units.

2. The method according to claim 1, wherein the determining (130) the entries of the two-dimensional array comprises determining the entries of the two-dimensional array to be a predetermined identification value of a corresponding specific process executed by a corresponding specific processor core at a corresponding specific time unit, or to be a predetermined value if a corresponding specific processor core does not execute one of the number of processes at a corresponding specific time unit.

3. The method according to claim 1 or 2, further comprising providing (140) a second two-dimensional array, wherein a first dimension of the second two-dimensional array represents the number of processes to be executed by the processing system and wherein a second dimension of the second two-dimensional array represents the number of time units.

4. The method according to claim 3, further comprising determining (130) entries of the second two-dimensional array depending on the entries of the two-dimensional array such that these entries of the second two-dimensional array indicate which specific process of the number of processes is executed at which specific time unit of the number of time units.

5. The method according to claim 4, wherein the determining (130) the entries of the second two-dimensional array comprises determining the entries of the second two-dimensional array to be a predetermined identification value of a corresponding specific process executed at a corresponding specific time unit, or to be a predetermined value if a corresponding specific process is not executed at a corresponding specific time unit.

6. The method according to any one of the preceding claims, further comprising evaluating (150) the execution of the number of processes by the number of processor cores depending on the determined entries of the two-dimensional array.

7. The method according to claim 6, further comprising adjusting (160), especially optimising, simulation parameters, especially the received input, depending on the step of evaluating (150) the execution of the number of processes by the number of processor cores.

8. The method according to claim 6 or 7, wherein the evaluating (150) the execution of the number of processes by the number of processor cores comprises determining one or more of the following values:
an amount of time for a specific processor core of the number of processor cores, which the corresponding processor core spends executing one or several of the number of processes;
a waiting time, which a specific process of the number of processes spends waiting before being executed;
a running time, for which a specific process of the number of processes is executed;
a deadline miss, when a specific process of the number of processes is not completely executed before a deadline;
a deadline miss time, which a specific process of the number of processes would have required in order to be completely executed before a deadline;
a trigger time, when a specific process of the number of processes is triggered to be executed;
a process execution path;
a latency.

9. The method according to any one of the preceding claims, wherein the input comprises one or more of the following information:
the number of time units;
a length of each time unit;
a predetermined execution time for a specific process of the number of processes;
a priority of a specific process of the number of processes;
a scheduling algorithm for a specific process of the number of processes;
a predetermined allocation of a specific process of the number of processes to a specific processor core of the number of processor cores.

10. The method according to any one of the preceding claims, further comprising determining (160) an allocation of the number of processes to the number of processor cores depending on the determined entries of the two-dimensional array.

11. The method according to any one of the preceding claims, wherein the model of the processing system is an AMALTHEA model.

12. A computing unit configured to perform the method steps of a method according to any one of the preceding claims.

13. A computer program comprising instructions which, when the program is executed by a computer, cause the computer to carry out the method steps of any one of the claims 1 to 11.

14. A computer-readable data carrier having stored thereon a computer program of claim 13.
